# EUROPÄISCHE PATENTSCHRIFT

(11) **EP 0 417 876 B1**
(45) Veröffentlichungstag und Bekanntmachung des Hinweises auf die Patenterteilung: **03.03.1993**
(21) Anmeldenummer: 90250233.5
(22) Anmeldetag: 12.09.1990
(51) Int. Cl.: F16L 49/02, F16L 27/02, E03F 3/04

(54) **Rohrelement zum Aufbau eines Kanals**
Pipe element for assembling a canal
Elément de tuyau pour assembler un canal

(30) Priorität: 13.09.1989 DE 3930615
(43) Veröffentlichungstag der Anmeldung: 20.03.1991
(73) Patentinhaber: Wagenhuber, Walter, D-22391 Hamburg (DE)
(72) Erfinder: Wagenhuber, Walter, D-22391 Hamburg (DE)
(74) Vertreter: Patentanwälte Wenzel & Kalkoff

(56) Entgegenhaltungen:
- DE-A- 3 019 623
- DE-A- 3 310 264
- FR-A- 2 292 918

## Beschreibung

Die Erfindung betrifft ein Rohrelement zum Aufbau eines Kanals aus mehreren dieser Elemente, wobei an der einen Elementstirnseite ein Muffenrand und an der anderen ein Spitzendenrand mit einer umlaufenden elastischen Dichtung angeordnet ist. Zumeist werden derartige Rohrelemente als Fertigteile aus Stahl- oder Spannbeton vorgesehen, wobei in den Kanälen Leitungen oder Kabel verlegt werden, oder wobei die Kanäle zum Transport von Flüssigkeiten, z.B. Wasser genutzt werden.

Ein solches Rohrelement ist z.B. aus DE-A-3 019 623 oder DE-A-3 310 264 bekannt.

Es sind Rohrelemente bekannt, bei denen zum Aufbau eines Kanals die Enden der Rohrelemente mit Spitzende und Muffe ineinander geschoben werden. Sämtliche anfallende Belastungskräfte werden allein über eine Kunststoffdichtung übertragen. Zwischen den zu verlegenden Rohrelementen eines Kanals treten in Boden-Setzungsgebieten Knickwinkel von einigen Grad auf. Auftretende Quer- oder Scherkräfte führen dazu, daß die Dichtung auf einer Seite gestaucht wird und auf der anderen Seite der zu dichtende Spalt dadurch entsprechend größer wird. Zudem tritt durch den Knickwinkel eine Schrägstellung der Dichtung im Muffenspalt auf, wobei eine dadurch erforderliche größere Dichtungslänge durch Elastizität in der Dichtung kompensiert werden muß. Die genannten Effekte führen dazu, daß nur relativ kleine Knickwinkel zugelassen werden können und/oder daß eine Ausführung mit Doppeldichtungen erforderlich ist. Um beim Setzungsvorgang Zwängungen zwischen zwei Rohrelementen zu vermeiden, ist es erforderlich, einen ausreichenden Abstand zwischen jeweils zwei Elementen vorzusehen. Dadurch wird der Aufbau des Kanals erschwert. Auch bei Belassen eines Abstandes zwischen jeweils zwei Rohrelementen ist es möglich, daß über die Kanallänge an einigen Fugen Zwängungen auf treten, die zu Abplatzungen im Dichtungsbereich und damit zu Undichtigkeiten führen.

Der Erfindung liegt die Aufgabe zugrunde, ein einfach montierbares Rohrelement zu schaffen, das ohne eine wesentliche Beanspruchung der Dichtung auf einen aus mehreren solcher Elemente aufgebauten Kanal ausgebübte Querkräfte zwischen zwei aneinandergefügten Rohrelementen überträgt, wobei sich zwischen zwei Rohrelementen ein ggf. auch größerer Abknickwinkel ausbilden kann.

Diese Aufgabe wird in Verbindung mit den Merkmalen des eingangs genannten Rohrelementes dadurch gelöst, daß der Muffenrand und der Spitzendenrand derart mit in Längsrichtung des Rohrlements ineinandergreifenden Verzahnungselementen versehen sind, daß ein Verzahnungsgelenk mit einem definierten Kippbereich für zwei aneinandergefügte Rohrelemente gebildet ist. Erfindungsgemäß ist der Muffenrand und der Spitzendenrand mit in Längsrichtung des Rohrelements ineinandergreifenden Verzahnungselementen versehen, wobei eine auf Scherung beanspruchbare gelenkige Verzahnung mit einem definierten Kippbereich für zwei aneinandergefügte Rohrelemente gebildet ist. Dabei bleibt zwischen dem Muffenrand und dem Spitzendenrand der aneinandergefügten Rohrelemente ein durch die Fugendichtung gedichteter Fugenspalt erhalten. Es ist konstruktiv eine Dreh- oder Kippbewegung um eine quer zur Längsrichtung der Rohrelemente sich erstreckende und festliegende Gelenkachse erreicht. Die durch das Verzahnungsgelenk zugelassene definierte Schwenkbewegung erfolgt in Setzungsrichtung, so daß also Abwinkelungen in Setzungsrichtung möglich sind. Eine gegenseitige Relativverschiebung der Rohrelemente ist jedoch vermieden. Die auftretenden Kräfte werden über die Verzahnunselemente übertragen, so daß auf die elastische Dichtung keine wesentlichen Kräfte wirken. Auch bei größeren Abknickwinkeln ist ein im wesentlichen gleichbleibender Anpreßdruck der Dichtung in der Umfangsfuge gewährleistet. Dadurch, daß benachbarte Rohrelemente nur in Höhe des Verzahnungsgelenkes in Längsachsenrichtung direkt aneinandergefügt sind, wobei außerhalb des Gelenkbereichs zwischen der Muffe und dem von dieser umgebenen Spitzendenrand in jeder Kipposition bzw. bei jedem Knickwinkel ein ausreichender Spalt verbleibt, in dem die Fugendichtung umläuft, werden Zwängungen vermieden. Im ganzen ist ein Rohrelement erreicht, das im Unterschied zu dem bekannten Element einen schnellen und sicheren Kanalaufbau sowie zuverlässige Dichtung auch bei großen Abknickwinkeln sicherstellt.

Eine besonders vorteilhafte und zweckmäßige Ausgestaltung der Erfindung besteht darin, daß außenseitig an dem Spitzendenrand ein Paar sich in der Kippachse gegenüberliegender Konsolen (Zähne) angeordnet ist, wobei der Spitzendenrand in Längsrichtung des Rohrelements über die Konsolen hervorsteht, und daß in dem Muffenrand ein Paar Ausnehmungen ausgebildet ist, wobei die beiden Konsolen eines Rohrelements und die beiden Ausnehmungen des angrenzenden Rohrelements das Verzahnungsgelenk bilden. Eine Konsole greift als Zahn, Nase, Vorsprung od.dgl. in die zugeordnete Ausnehmung des Muffenrandes ein. Die Verbindungsachse von zwei derartigen Verzahnungsverbindungen bildet die Mittelachse des Schwenkbereiches. Um die Mittelachse können sich die Rohrelemente bei Setzungen verschwenken. Dadurch, daß der Spitzendenrand über die Stirnseite der Konsolen hervorsteht, verbleibt zwischen Konsolenvorderkante und Spitzendenvorderkante ein Bereich, in dem die Dichtung ohne Unterbrechung um den Spitzendenrand geführt werden kann.

Eine weitere vorteilhafte Ausführungsform der Erfindung besteht darin, daß der Muffenrand mit zunehmendem Abstand von der Gelenkachse in Richtung der Längsachse des Rohrelements zurücktritt. Dadurch wird eine relativ kurze Übergreifungslänge des Muffenstoßes erreicht. Mit anderen Worten: Es entsteht bei gleicher Übergreifungslänge des Muffenstoßes eine maximale Lagerungsfläche für die Konsole. - Erfindungsgmäß bleibt beim Kippen der Dichtungsspalt erhalten. Dies ist bei nicht zurücktretendem Muffenrand insbesondere dadurch erreicht, daß die Axiallänge von Zähnen größer ist als die Tiefe von Ausnehmungen, in die die Zähne eingreifen.

Im Bereich der Dichtung ändert sich der Spalt zwischen dem Muffenrand und dem Spitzendenrand aneinandergefügter Rohrelemente beim Kippen bzw. bei der Schwenkbewegung ggf. nur geringfügig, so daß der Anpreßdruck der Dichtung im wesentlichen gleich bleibt. Wenn der Spalt im ungeknickten Zustand aneinandergefügter Rohrelemente hinsichtlich einer besonders einfachen Montage relativ groß gewählt, eine Dichtung relativ geringer Elastizität vorgesehen und/oder durch ein relativ großes Spiel des Verzahnungsgelenks eine relativ große Abknickung zugelassen werden soll, besteht eine besondere Ausführungsform der Erfindung darin, daß die Dichtungsflächen des Muffenrandes eine Krümmung mit einem Radius um die Kippachse aufweisen.

Besonders zweckmäßig ist es, daß die Auflagerflächen an den Konsolen abgerundet sind, um jegliche Verkantungen während der Abknickung der Rohrenden gegeneinander zu vermeiden und/oder um relativ große Abknickwinkel zuzulassen. Ganz allgemein sind die Verzahnungselemente so geformt, daß deren gelenkige Verzahnung die Kippbewegung in gewünschtem Maß gewährleistet. Zu diesem Zweck können insbesondere auch abrundungsfreie Zähne in ausreichendes Spiel belassende Ausnehmungen kippbar eingreifen.

Weitere Zweckmäßigkeiten, Ausführungsarten und Ausgestaltungsbeispiele der Erfindung gehen aus Unteransprüchen und den im folgenden beschriebenen schematischen Zeichnungen hervor. Es zeigen
Fig. 1 in Längsansicht einen Kanalabschnitt mit drei aneinander gefügten erfindungsgemäßen Rohrelementen,
Fig. 2 ein erfindungsgemäßes Rohrelement in perspektivischer Stirnseitenansicht und
Fig. 3 im Längsquerschnitt zwei zusammengefügte Rohrelemente im Verbindungsbereich.

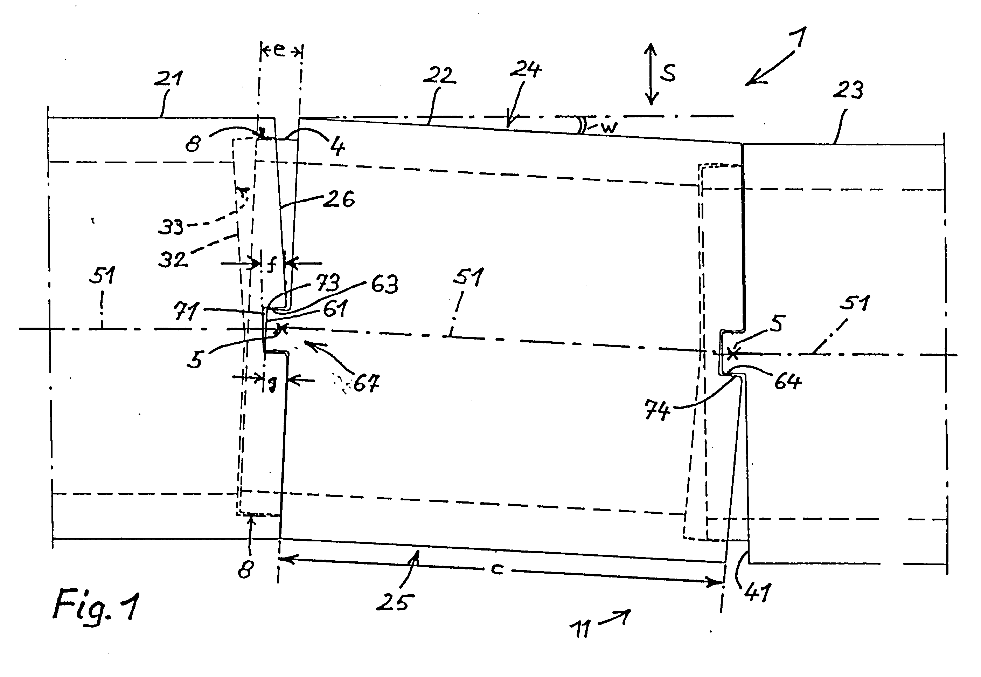

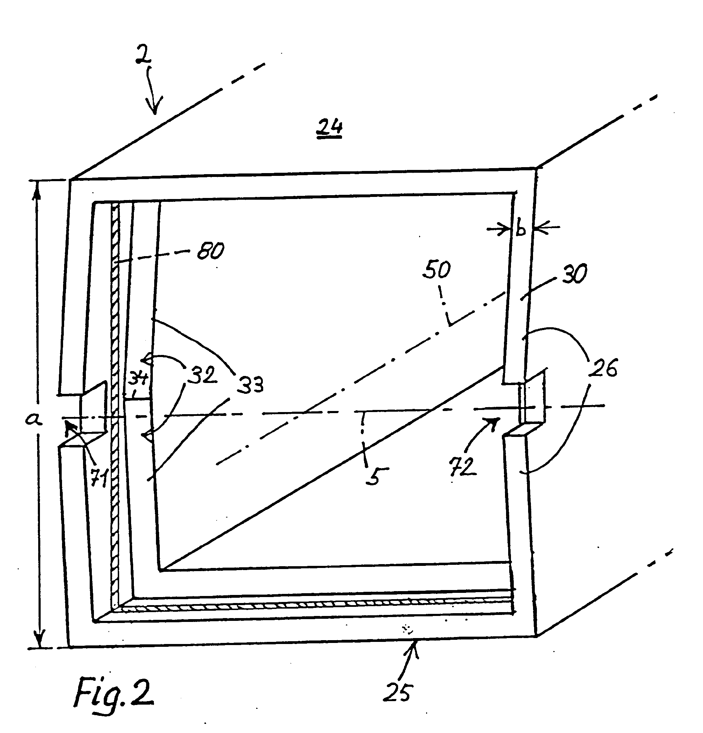

Ein Rohrelement 2 gemäß Ausführungsbeispiel ist im Querschnitt quadratisch mit einer Kantenlänge von z.B. a = 2 m (Fig. 2). Die Wandstärke beträgt z.B. b = 0,3 m, und das Rohrelement weist z.B. eine Länge von c = 3 m auf (Fig. 1). Die Rohrelemente sind insbesondere als Betonfertigteile ausgeführt, die stirnseitig aneinander gefügt werden, um in dieser Aneinanderreihung einen Kanal 1 zu bilden. Ein solcher Kanal 1 ist im Erdreich verlegt und entlang seiner Bodenseite 11 ungleichmäßigen Bodensetzungen ausgesetzt (Setzungsgebiet).

Zwei benachbarte Rohrelemente 21, 22 bzw. 22, 23 sind stirnseitig mittels einer dichtenden Steckverbindung zusammengefügt. Zu diesem Zweck umfaßt das Rohrelement 21 an der einen Stirnseite eine durch einen umlaufenden hervorstehenden Muffenrand 30 gebildete Muffe 3. Die Muffe nimmt unter Belassen eines Spalts 9 einen Steck- oder Spitzendenrand 4 auf, der umlaufend an der gegenüberliegenden Stirnseite des benachbarten Rohrelements 22 ausgebildet ist. Auf den Spitzendenrand 4 ist eine Dichtung 8 in Form eines umlaufenden Ringes aufgebracht. Die Dichtung 8 besteht aus einem elastischen Kunststoff und schließt den eine Umfangsfuge bildenden Spalt 9 zwischen dem Muffenrand 30 und dem Spitzendenrand 4, wobei die Fuge gegen Flüssigkeit oder auch Gase abgedichtet ist.

Erfindungsgemäß ist zwischen zwei benachbarten Rohrelementen 21, 22 bzw. 22, 23 eine Gelenkverbindung in Form einer gelenkigen Verzahnung mit in Längs-(Axial-)richtung der Rohrelemente ineinandergreifenden Verzahnungselementen ausgebildet, mit der eine festgelegte und definierte Drehung oder Kippung benachbarter Rohrelemente erreicht ist.

In der Höhe der Mittenebene 51 des Rohrelements 2 ist in dem Muffenrand 30 jeweils eine Ausnehmung 71, 72 ausgebildet. Die Mittenebene 51 halbiert den Durchmesser der Rohrelemente in Richtung der Setzungsbewegung. An der anderen Stirnseite des Rohrelements 22, also an dem Spitzende 4, sind an der Außenseite Konsolen 61, 62 in Form von Nasen oder hervorstehenden Teilen angeordnet. Die Konsolen 61, 62 sind derart angeordnet und ausgebildet, daß sie jeweils in Form eines Zahnes in die zugeordnete Ausnehmung 71 bzw. 72 eingreifen. Die beiden Verzahnungsverbindungen 61/71 und 62/72 bilden ein Verzahnungsgelenk 67 mit einer gedachten Hauptachse 5. In dem Bereich dieser Hauptachse 5 sind aneinandergefügte Rohrelemente 21, 22 bzw. 22, 23 drehbar oder kippbar gelagert. So ist gemäß Fig. 1 das Rohrelement 22 gegenüber den benachbarten Rohrelementen 21, 23 um einen Winkel von z.B. w ≈ 3° gekippt. Die im Erdreich in Richtungen S infolge ungleichmäßiger Setzungen auftretenden Kräfte werden dabei über die Auflagerflächen der Verzahnungsverbindungen 61/71 und 62/72 aufgenommen, wobei die Kräfte im wesentlichen von der Dichtung 8 ferngehalten sind.

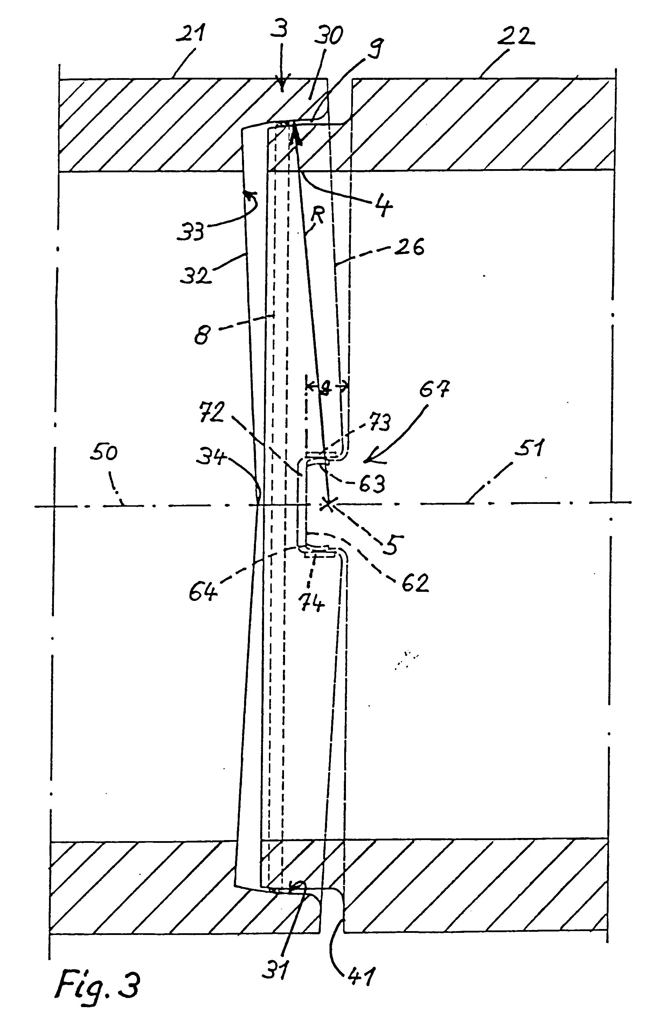

Wie aus Fig. 1 und 3 ersichtlich, ist die Stecklänge e des Spitzendenrandes 4 größer als die Stecklänge g der Konsolen 61 bzw. 62. Damit ist gewährleistet, daß auch im Bereich der Konsolen 61, 62 zwischen dem Spitzendenrand 4 und der Konsolenstirnfläche ein Bereich verbleibt, durch den die Dichtung 8 durchgeführt werden kann. Zur Veranschaulichung ist in Fig. 2 ein (gedachter) umlaufender Dichtungsbereich 80 auf dem zu dem Spitzende zugehörigen Muffenrand dargestellt. Dieser Dichtungsbereich 80 entspricht der Anordnung der Dichtung 8 bei zusammengesetzten Rohrelementen im ungeknickten Zustand.

Eine besonders zweckmäßige und vorteilhafte Gestaltung der Erfindung besteht darin, daß der Muffenrand 30 im Bereich der Ausnehmungen 71, 72 stirnseitig hervorsteht, wobei er zur Oberseite 24 und zur Unterseite 25 des Rohrelements 2 mit Schrägflächen 26 abfällt. Durch den hervorstehenden Muffenrand 30 mit den Ausnehmungen 71, 72 ist erreicht, daß die Breite g der Konsolenzähne 61, 62 im wesentlichen gleich der Tiefe f der Ausnehmungen 71, 72 ist. Die Rohrelemente liegen also im Bereich der Ausnehmung zusammen, während durch die Schrägflächen zu den Rändern hin ein wachsender Spalt entsteht, der sich bei Abwinkelungen schließt. Auch kann die Schrägfläche 26 als definierte Anlage für eine unterhalb des Spitzendenrandes 4 ausgebildete Umfangskante 41 genutzt werden.

Wie aus Fig. 3 ersichtlich, ist es besonders vorteilhaft, Dichtungsflächen 31 des Muffenrandes mit einer Krümmung zu versehen, die durch einen Radius R um eine mittlere Gelenkachse 5 der Verzahnungsgelenkverbindungen 61/71 und 62/72 bestimmt ist. So ist insbesondere bei relativ großen Abknickungen bzw. Abwinkelungen oben und unten in der Fuge 9 im wesentlichen ein konstanter Andruck für die Dichtung 8 erreicht.

Eine weitere zweckmäßige Detailgestaltung besteht darin, daß innerhalb der Muffe 3 ein umlaufender Muffenbodenrand 32 ausgebildet ist. Dieser Bodenrand 32 ist im Bereich der mittleren Gelenkachse 5 bzw. im Bereich der Ausnehmungen 71, 72 erhaben ausgebildet, während er mit Schrägflächen 33 zu der Oberseite 24 und der Unterseite 25 des Rohrelements 2 zurücktritt. Die Erhebung 34 kann vorgesehen sein, um eine definierte Anlage für die Stirnfläche des Spitzendenrandes 4 des benachbarten Rohrelements zu bilden und zwar insbesondere als Anschlag der Rohrelemente während der Montage. Auch kann die Schrägfläche 33 anstelle der Schrägfläche 26 genutzt werden, um eine Stirnflächenanlage bei maximaler Abwinkelung bzw. Verkippung zwischen zwei Rohrelementen vorzusehen. Es ist ersichtlich, daß zur Ausbildung der Gelenkverbindung zwischen Konsolenzahn 6 und Ausnehmung 7 diese Verzahnungselemente so geformt sind, daß eine Kipp- oder Drehbewegung in gewünschtem Maß möglich ist. Hierzu ist ein ausreichendes Spiel des Konsolenzahnes in der Ausnehmung vorzusehen, oder - was zweckmäßiger ist - die Auflagerflächen 63 sind an den Konsolen 61, 62 abgerundet. Auch können die Auflagerflächen 73 der Ausnehmung 71, 72 mit entsprechend konkav geformten Buchtungen oder Krümmungen versehen sein. Durch das für die Montage erforderliche Spiel zwischen Konsolen 61/62 und Ausnehmungen 71/72 legt sich die Konsole je nach Richtung der Querkräfte an die obere oder untere Auflagerung. Die Kippachse fällt dann mit der Verbindungslinie zwischen den belasteten Auflagerflächen zusammen. Da aber untere und obere Auflagerflächen 73/63 bzw. 74/64 in der Nähe der mittleren Kippachse 5 liegen, schwenken die Rohrelemente in beiden Fällen praktisch um die mittlere Kippachse 5. Der Bereich dieser Schwenkachsen ist als Kipp- oder Drehbereich bezeichnet worden.

Statt eines rechteckigen Querschnittes können die Rohrelemente auch andere Querschnitte, insbesondere Kreisquerschnitte aufweisen. Selbstverständlich können die Rohrelemente als Kanalsegmente auch gekrümmt oder als soche abgeknickt ausgeführt sein.

## Patentansprüche

1. Rohrelement (2) zum Aufbau eines Kanals (1) aus mehreren dieser Elemente (21, 22, 23), wobei an der einen Elementstirnseite ein Muffenrand (30) und an der anderen ein Spitzendenrand (4) mit einer umlaufenden elastischen Fugendichtung (8) angeordnet ist, **dadurch gekennzeichnet**, daß der Muffenrand (30) und der Spitzendenrand (4) derart mit in Längsrichtung des Rohrelements (2) ineinandergreifenden Verzahnungselementen (61, 62; 71, 72) versehen sind, daß ein Verzahnungsgelenk (67) mit einem definierten Kippbereich für zwei aneinandergefügte Rohrelemente (21, 22 bzw. 22, 23) gebildet ist.

2. Rohrelement nach Anspruch 1, **dadurch gekennzeichnet**, daß außenseitig an dem Spitzendenrand (4) ein Paar sich gegenüberliegender Konsolen (61, 62) angeordnet ist, wobei der Spitzendenrand (4) in Längsrichtung des Rohrelements (2) über die Konsolen (61, 62) hervorsteht, und daß in dem Muffenrand (30) ein Paar Ausnehmungen (71, 72) ausgebildet ist, wobei die beiden Konsolen (61, 62) eines Rohrelements (22) und die beiden Ausnehmungen des angrenzenden Rohrelements (21) das Verzahnungsgelenk (67) bilden.

3. Rohrelement nach Anspruch 2, **dadurch gekennzeichnet**, daß die Auflagerflächen (63) an den Konsolen (61, 62) abgerundet sind.

4. Rohrelement nach einem der Ansprüche 1 bis 3, **dadurch gekennzeichnet**, daß der Muffenrand (30) mit zunehmendem Abstand von einer mittleren Gelenkachse (5) in Richtung der Längsachse (50) des Rohrelements (2) zurücktritt.

5. Rohrelement nach einem der Ansprüche 1 bis 4, **dadurch gekennzeichnet**, daß die Dichtungsflächen (31) des Muffenrandes (30) eine Krümmung mit einem Radius (R) um eine Gelenkachse (5) aufweisen.

## Claims

1. A tubular component (2) for constructing a duct (1) from a number of such components (21, 22, 23), one component ending in a socket end (30) and another component ending in a pointed tip (4) with a peripheral resilient joint seal (8), characterised in that the socket end (30) and the tip end (4) have toothed components (61, 62; 71, 72) which interlock in the longitudinal direction of the tubular component (2) so as to form a toothed joint (67) having a defined tilting range for each pair of joined tubular components (21, 22 or 22, 23).

2. A tubular component according to claim 1, characterised in that a pair of facing brackets (61, 62) are externally disposed on the pointed end (4), the pointed end (4) projecting beyond the brackets (61, 62) in the longitudinal direction of the tubular component (2), and a pair of recesses (71, 72) are formed in the socket end (30), the two brackets (61, 62) of each tubular component (22) and the two recesses in the adjacent tubular component (21) forming the toothed joint (67).

3. A tubular component according to claim 2, characterised in that the bearing surfaces (63) on the brackets (61, 62) are rounded.

4. A tubular component according any of claims 1 to 3, characterised in that the socket end (30) recedes in the direction of the longitudinal axis (50) of the tubular component (2), with increasing distance from a central joint axis (5).

5. A tubular component according to any of claims 1 to 4, characterised in that the sealing surfaces (31) of the socket end (30) have a curvature with a radius (R) around a joint axis (5).

## Revendications

1. Elément tubulaire (2), destiné à réaliser une gaine (1) constituée de plusieurs de ces éléments (21, 22, 23), dans lequel une extrémité à emboîtement (30) est disposée sur un front de l'élément, une extrémité à bout mâle (4), comportant une garniture d'étanchéité (8) élastique sur tout le pourtour de l'élément, étant disposée sur l'autre front, caractérisé en ce que l'extrémité à emboîtement (30) et l'extrémité à bout mâle (4) sont pourvues d'éléments d'engrènement (61,62;71,72), qui engrènent les uns dans les autres dans la direction longitudinale de l'élément tubulaire (2), de façon à former une articulation en engrènement (67), avec une zone de basculement parfaitement définie pour deux éléments tubulaires aboutés (21, 22 ou 22, 23).

2. Elément tubulaire selon la revendication 1, caractérisé en ce qu'une paire de consoles opposées (61, 62) sont disposées à l'extérieur contre l'extrémité à bout mâle (4), l'extrémité à bout mâle (4) étant en saillie, dans le sens longitudinal de l'élément tubulaire (2), par rapport aux consoles (61, 62), et qu'une paire d'évidements (71, 72) sont formés dans l'extrémité à emboîtement (30), les deux consoles (61, 62) d'un élément tubulaire (22) et les deux évidements de l'élément tubulaire immédiatement voisin (21) formant l'articulation à engrènement (67).

3. Elément tubulaire selon la revendication 2, caractérisé en ce que les surfaces d'appui (63) des consoles (61, 62) sont arrondies.

4. Elément tubulaire selon l'une des revendications 1 à 3, caractérisé en ce que l'extrémité à emboîtement (30), quand augmente sa distance à un axe d'articulation moyen (5), recule dans la direction de l'axe longitudinal (50) de l'élément tubulaire (2).

5. Elément tubulaire selon l'une des revendications 1 à 4, caractérisé en ce que les surfaces d'étanchéité (31) de l'extrémité à emboîtement (30) présentent une courbure de rayon (R) autour d'un axe d'articulation (5).
